# FASCICULE DE BREVET EUROPEEN

(11) **EP 1 163 110 B1**
(45) Date de publication et mention de la délivrance du brevet: **02.06.2004**
(21) Numéro de dépôt: 00910845.7
(22) Date de dépôt: 16.03.2000
(51) Int. Cl.: B29D 30/54

(54) **PROCEDE DE CHAPAGE D'UNE CARCASSE DE PNEUMATIQUE**
VERFAHREN ZUM AUFLEGEN DER LAUFFLÄCHE AUF EINE REIFENKARKASSE
METHOD FOR TREADING A TYRE BODY

(30) Priorité: 19.03.1999 FR 9903499
(43) Date de publication de la demande: 19.12.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: CHAMOY, François, F-63400 Chamalières (FR)
(74) Mandataire: Cohen, Sylvia
(86) Numéro de dépôt international: PCT/EP2000/002321
(87) Numéro de publication internationale: WO 2000/056531

(56) Documents cités:
- EP-A- 0 089 855
- EP-A- 0 153 981
- FR-A- 2 179 910
- FR-A- 2 289 328
- US-A- 2 757 702
- US-A- 3 614 969
- US-A- 3 730 801
- US-A- 3 837 385
- US-A- 3 886 028
- US-A- 4 013 499
- US-A- 4 185 056
- US-A- 5 467 647

## Description

L'invention concerne un procédé de chapage de carcasses de pneumatiques vulcanisées. Aujourd'hui, on fait appel à ces procédés généralement dans le cadre du rechapage mais, bien entendu, tout ce qui sera dit dans la suite est valable pour le chapage de carcasses de pneumatiques neuves.

Il existe deux principaux types de procédé de rechapage consistant pour l'un, couramment appelé « rechapage à froid », à utiliser une bande de roulement précuite que l'on dispose sur une carcasse prête à être rechapée, puis à cuire l'ensemble en utilisant des moyens de chauffage tels qu'une étuve; l'autre procédé, dit "rechapage à chaud », consiste à poser une bande de roulement crue, sous forme notamment de feuilles, de bandelettes ou de profil, sur une carcasse prête à être rechapée, puis à cuire l'ensemble dans un moule.

Ces procédés de rechapage à chaud s'appliquent en particulier au rechapage de pneumatiques de grandes dimensions tels que des pneumatiques destinés aux poids lourds, machines agricoles, véhicules de génie civil, etc., pour lesquels des problèmes de manutention et de déformation de bandes de roulement rendent difficile leur utilisation sous une forme précuite. L'invention se situe dans le domaine du rechapage à chaud.

Parmi les procédés de rechapage à chaud, la publication US 4 053 265 décrit un procédé qui consiste à utiliser un moule annulaire élastique, préférentiellement réalisé en caoutchouc, destiné à permettre le moulage et la vulcanisation de la bande de roulement. Ce moule élastique est disposé sur la carcasse de pneumatique à rechaper qui a été préalablement recouverte par une bande de roulement crue, l'ensemble moule-carcasse étant ensuite entièrement enveloppé par une membrane assurant l'étanchéité. Cet ensemble est ensuite placé dans une étuve pour la cuisson après réalisation du vide dans la membrane.

Plus précisément, afin de pouvoir assurer une parfaite étanchéité entre la carcasse, la bande de roulement et le moule élastique, comme le montre la publication US 4 053 265 (Figure 2), il est nécessaire de réaliser l'enveloppement de la carcasse recouverte du moule à l'aide de deux membranes élastiques : une membrane dite « intérieure » qui s'étend à partir de la surface extérieure des flancs sur toute la surface intérieure de la carcasse et une membrane dite « extérieure » qui est recouverte par la première membrane au niveau de la surface extérieure des flancs, ou inversement, afin de garantir la continuité de l'étanchéité entre les deux membranes, cette membrane extérieure recouvre ainsi toute la surface extérieure du moule et de la partie des flancs non recouverte par la membrane intérieure.

La mise en place de ces membranes est particulièrement difficile. En effet, il est nécessaire d'étirer très fortement la membrane extérieure afin qu'elle puisse recouvrir l'ensemble de la bande de roulement et des flancs, cette opération étant rendue encore plus délicate par le fait qu'il s'agisse généralement de pneumatiques de grandes dimensions. Ce problème de mise en place entraîne, de plus, une très grande rapidité d'usure de cette membrane extérieure soumise à de grandes sollicitations élastiques et des risques fréquents de déchirures, ceci ayant pour conséquence la nécessité de changer fréquemment ces membranes sans exclure les risques d'utiliser une membrane abîmée génératrice de défauts dans le pneumatique réalisé.

La publication US 4 053 265 propose une alternative à l'utilisation de ces deux membranes, qui consiste à utiliser une membrane extérieure identique à celle de la première solution si ce n'est qu'elle utilise un joint torique afin de réaliser l'étanchéité au niveau des flancs et une membrane intérieure au pneumatique sous forme d'une chambre à air reliée à un disque support de l'enveloppe de pneumatique. Il est clair que cette solution ne résout pas les problèmes précités liés à l'utilisation de la membrane extérieure, et que, de plus, cette solution ne peut permettre de réaliser une bonne étanchéité qu'à la condition de vulcaniser les joints toriques sur les flancs de la carcasse de pneumatique, ce qui est problématique.

L'invention a pour objet un procédé de chapage à chaud utilisant un moule annulaire élastique qui permet de pallier ces inconvénients.

Selon l'invention, le procédé comprend les étapes suivantes :
- on dépose une bande de roulement crue sur une carcasse de pneumatique à chaper,
- la carcasse de pneumatique ainsi recouverte ayant été montée sur une jante et gonflée, on positionne sur la bande de roulement un moule annulaire élastique possédant une surface annulaire intérieure assurant le moulage de la bande de roulement,
- on dispose entre chaque bourrelet et chaque bord périphérique du moule un flasque élastique souple qui recouvre la surface extérieure de l'enveloppe de pneumatique constituée par la carcasse recouverte de la bande de roulement, comprise entre ledit bourrelet et ledit bord,
- on dispose l'ensemble dans une enceinte pressurisée et chauffée.

L'invention concerne également un dispositif de chapage qui comprend une jante de support de ladite carcasse, un moule annulaire élastique destiné à assurer le moulage d'une bande de roulement crue recouvrant la carcasse de pneumatique, et deux flasques élastiques souples destinés à recouvrir la surface extérieure de l'enveloppe de pneumatique ainsi constituée, comprise entre un bourrelet de ladite enveloppe et le bord périphérique du moule correspondant.

Dans la suite, le choix des directions radiales et axiales pour le dispositif de rechapage ainsi que pour le pneumatique est relatif aux axes généralement utilisés comme référence dans le pneumatique, la direction axiale correspondant à une direction parallèle à l'axe de rotation de l'enveloppe de pneumatique, les plans radiaux étant des plans contenant un rayon de l'enveloppe de pneumatique et passant par ledit axe de rotation.

D'autres caractéristiques et avantages de l'invention apparaîtront à la lecture d'un exemple de réalisation d'un dispositif de rechapage conforme à l'invention en référence au dessin annexé dans lequel :
- la figure 1 est une coupe radiale partielle du dispositif de rechapage,
- les figures 2A et 2B représentent deux demi-coupes radiales partielles du dispositif de rechapage représenté à la figure 1 selon deux variantes de réalisation,
- la figure 3 est une coupe axiale d'une jante du dispositif de rechapage représenté sur la figure 1,
- la figure 4 est une vue en élévation du système de verrouillage de la jante représentée sur la figure 3,
- les figures 5A et 5B sont des coupes axiales de la jante représentée sur la figure 3 selon une variante de réalisation, respectivement en position verrouillée et déverrouillée de ladite jante,
- la figure 6 est une vue en élévation du système de verrouillage de la jante représentée sur les figures 5A et 5B.

On considérera une enveloppe de pneumatique à rechaper 1 comprenant une carcasse 2 comportant notamment deux bourrelets 21, 22 et deux flancs 23, 24 recouverte d'une bande de roulement crue 3, la bande de roulement ayant été déposée sur la carcasse 2 par tout moyen approprié, et des épaules 11, 12 reliant le sommet de la bande de roulement 3 aux flancs 23, 24.

Dans la suite, on désignera par les mêmes références les éléments communs aux différentes variantes de réalisation de l'invention présentées sur les figures.

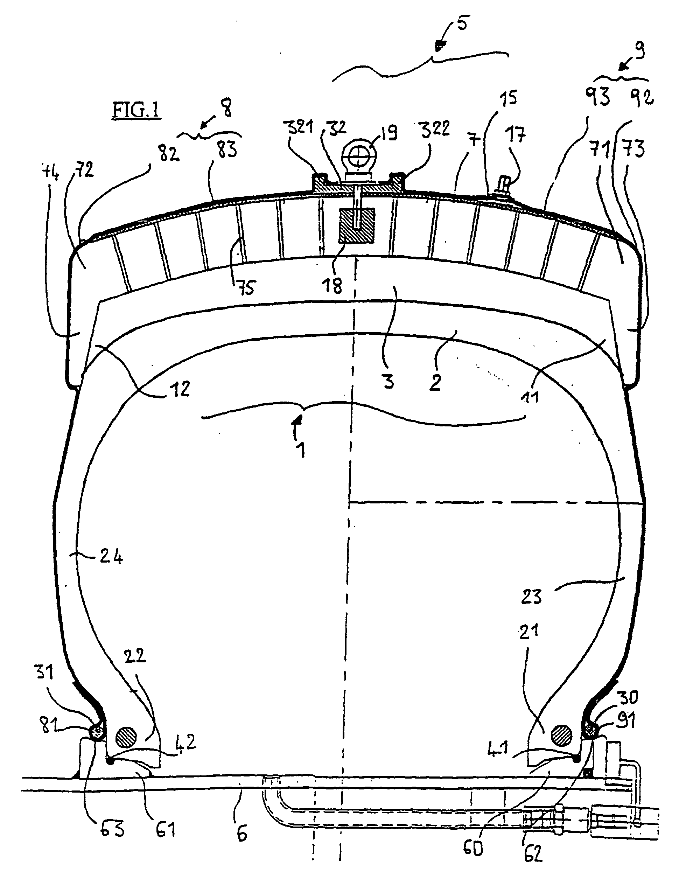

Selon la figure 1, le dispositif de rechapage 5 comprend une jante 6 sur laquelle l'enveloppe de pneumatique 1 doit être montée, un moule annulaire élastique 7 de moulage de la bande de roulement 3 et deux flasques élastiques 8 et 9 destinés à recouvrir la surface extérieure de l'enveloppe de pneumatique 1 comprise entre un bourrelet 21, 22 de ladite enveloppe et le bord périphérique 71, 72 du moule correspondant afin d'assurer l'étanchéité de l'ensemble carcasse de pneumatique 2, bande de roulement 3, moule élastique 7 et jante 6. Le dispositif de rechapage mis en place sur une enveloppe de pneumatique est destiné à être placé dans une enceinte chauffée et pressurisée telle qu'une étuve.

Le moule élastique 7 se présente sous la forme d'un anneau dont la surface intérieure définit le moulage de la bande de roulement et qui possède des bords périphériques annulaires 71, 72 qui se prolongent sous forme d'ailes 73, 74 destinées à recouvrir respectivement les épaules 11, 12 de l'enveloppe de pneumatique 1.

Le moule annulaire 7 doit être suffisamment élastique dans une direction orientée radialement vers l'extérieur et résister à la chaleur de vulcanisation sans se déformer. Le moule doit également accepter de subir de multiples remises en température et résister au déchirement. On peut, à titre d'exemple, utiliser pour former ce moule annulaire un élastomère approprié pour obtenir les propriétés ci-dessus.

Ainsi, lorsque le moule 7 est étiré, son diamètre intérieur est supérieur au diamètre extérieur de l'enveloppe de pneumatique 1 comportant la bande de roulement crue 3, ce qui permet la mise en place du moule 7 sur cette dernière.

Un tel moule peut être réalisé à titre d'exemple conformément au procédé présenté dans la publication US 3 983 193 dans lequel on utilise une enveloppe de pneumatique neuve, en tant que "modèle de moulage", que l'on recouvre par une bande de caoutchouc vulcanisable crue. L'ensemble ainsi constitué est placé dans une étuve, après avoir été mis sous vide grâce à une membrane entourant cet ensemble, aux fins de réaliser la vulcanisation du moule. Le motif de moulage apparaissant sur la surface intérieure du moule correspond au négatif de la sculpture de la bande de roulement de l'enveloppe de pneumatique neuve utilisée.

Le moule 7 étant extrait de son « modèle de moulage », il est nécessaire de percer dans le moule des évents 75 qui s'étendent radialement à travers l'épaisseur de ce dernier pour l'utilisation future du moule afin d'autoriser une évacuation de l'air compris entre le moule et la carcasse à rechaper recouverte d'une bande de roulement crue durant le moulage et la vulcanisation de cette bande de roulement.

La surface circonférentielle extérieure du moule annulaire 7 est recouverte d'un premier manchon drainant élastique 15 permettant l'évacuation de l'air par l'intermédiaire des drains, qui peut être directement déposé sur le moule. Ce manchon drainant 15 peut être solidarisé au moule 7.

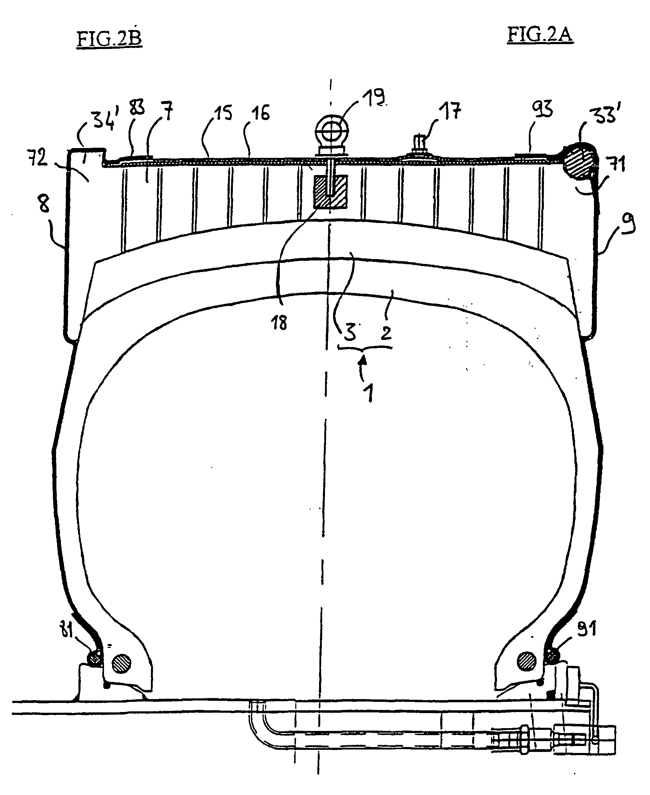

Selon les variantes de réalisation représentées sur les figures 2A et 2B, le manchon drainant 15 est lui-même recouvert d'une membrane annulaire élastique 16 à base d'un mélange élastomérique vulcanisé, une valve 17 anti-retour étant intégrée à la membrane annulaire élastique 16 afin de permettre de faire le vide.

On peut aussi prévoir, comme le montre la figure 1, d'intégrer ces manchons élastiques aux flasques élastiques 8 et 9, il suffit alors que l'un des flasques portent la valve anti-retour 17.

Afin de limiter et de contrôler la pénétration du moule 7 dans la bande de roulement, on peut prévoir des inserts métalliques 18 à l'intérieur du moule répartis le long de la circonférence de ce dernier et tels que l'ensemble de ces inserts forment une couronne dont les secteurs sont jointifs en position comprimée du moule. De plus, ces inserts métalliques peuvent permettre la fixation d'anneaux de traction 19 afin de faciliter les opérations de démoulage de l'enveloppe de pneumatique cuite.

Chaque flasque élastique 8 (9) comprend une extrémité périphérique 81 (91) de petit diamètre qui porte un joint torique d'étanchéité 30 (31) et une extrémité périphérique de grand diamètre 82 (92) prolongée par un deuxième manchon 83 (93) dont le diamètre est inférieur au diamètre extérieur du moule pour assurer la fixation élastique ainsi qu'une pré-étanchéité des flasques 8, 9 sur le moule 7. Comme le montrent les figures 1, 2A et 2B la longueur de ce manchon 83 (93) peut être plus ou moins importante comme on le verra plus en détails dans ce qui suit.

Chaque flasque 8 (9) est réalisé en un matériau élastique étanche. On pourra choisir un matériau caoutchouteux afin de réaliser un bon compromis entre la résistance thermique et l'élasticité.

Les joints toriques 30, 31 coopèrent avec des logements circonférentiels 62, 63 portés respectivement par les talons 60 et 61 de la jante 6. Aux fins d'assurer une bonne fixation étanche, le diamètre des joints toriques 30, 31, et donc des extrémités de petit diamètre 81, 91 des flasques 8 et 9, est inférieur à celui des logements circonférentiels 62 et 63.

Le moule 7 comporte un élément d'accrochage de l'extrémité périphérique de grand diamètre 82, 92 des flasques 8 et 9 :
- selon la variante représentée sur la figure 1, chaque élément d'accrochage est constitué par une aile 321 (322) d'un profil 32 en U rapporté et fixé de manière amovible sur la zone centrale de la surface extérieure du moule 7 de sorte que le manchon drainant 15 soit disposé sous ce profil. Le simple fait pour les manchons 83 et 93 de recouvrir ces ailes avec une certaine tension permet d'assurer une pré-étanchéité sur ledit profil 32. Ce profil en U 32 peut être aisément réalisé en matériau caoutchouteux et fixé par tout moyen approprié sur le moule 7 de sorte que son changement est facile. On peut également envisager dans cette variante de réaliser le manchon drainant 15 en trois parties dont deux parties latérales solidaires de chaque manchon 83, 93 et une partie centrale solidaire du moule 7 et située sous le profil en U 32.
- selon les variantes représentées sur les figures 2A et 2B, les éléments d'accrochage sont constitués respectivement par un joint torique 33' vulcanisé sur le moule ou par un épaulement 34' à arête vive porté par le moule. Dans ces variantes, les éléments d'accrochage sont portés par les bords périphériques 71 et 72 du moule 7, ce qui nécessite une réalisation de moule un peu plus délicate que dans la variante précédente mais il n'est pas nécessaire que les manchons 83 et 93 présentent une grande longueur.

Le dispositif 5 comprend également, comme on l'a dit précédemment, une jante 6 sur laquelle la carcasse de pneumatique est montée et gonflée. En effet, il est important lors de la mise en place du moule élastique 7 sur la bande de roulement que l'enveloppe de pneumatique soit gonflée, afin d'une part d'assurer une résistance à la pression qui va être exercée par le moule sur l'enveloppe et d'avoir une présentation uniforme de l'enveloppe vis-à-vis du moule pour faciliter sa mise en place et son centrage sur la bande de roulement.

Par ailleurs, il faut assurer une bonne étanchéité entre la carcasse et la jante en particulier lorsque le fluide utilisé dans l'étuve est de la vapeur d'eau. En effet, dans ce cas, si l'étanchéité n'est pas assurée, de l'eau s'accumule à l'intérieur de l'enveloppe de pneumatique ce qui entraîne des risques de cuisson irrégulière de l'enveloppe.

L'assurance d'une telle étanchéité ne pose pas de difficultés majeures dans le cas du chapage d'une carcasse de pneumatique neuve, en revanche pour le rechapage le problème est plus délicat du fait de la déformation des bourrelets de l'enveloppe de pneumatique. En effet, les bourrelets de ces enveloppes de pneumatique qui ont déjà été montées, ont subi de façon connue une déformation qui consiste en un resserrement des deux bourrelets l'un vers l'autre. Il n'est donc pas possible d'utiliser en tant que support de montage de la carcasse recouverte du dispositif de rechapage, une jante habituelle correspondant à l'enveloppe de pneumatique, l'écartement des bourrelets ayant changé.

Une solution consiste à utiliser pour le rechapage une jante munie d'une chambre à air. L'inconvénient de cette solution, outre le fait qu'elle impose l'utilisation d'une membrane supplémentaire constituée par la chambre à air, consiste dans le fait qu'il est nécessaire d'utiliser une jante dont la dimension correspondant à celle de l'enveloppe de pneumatique à rechaper, donc une jante pour chaque dimension (ce qui est également le cas dans l'utilisation d'une jante ordinaire pour le chapage d'une carcasse de pneumatique neuve).

La demanderesse a élaboré une nouvelle jante permettant un montage et démontage aisé de l'enveloppe de pneumatique sans nécessiter la présence d'une chambre à air, et qui permet à une même jante de s'adapter à des enveloppes de pneumatiques de dimensions différentes dans une plage donnée. Ainsi la carcasse de pneumatique à chaper est gonflée sur cette jante par action directe d'un fluide sur les parois intérieures de ladite carcasse.

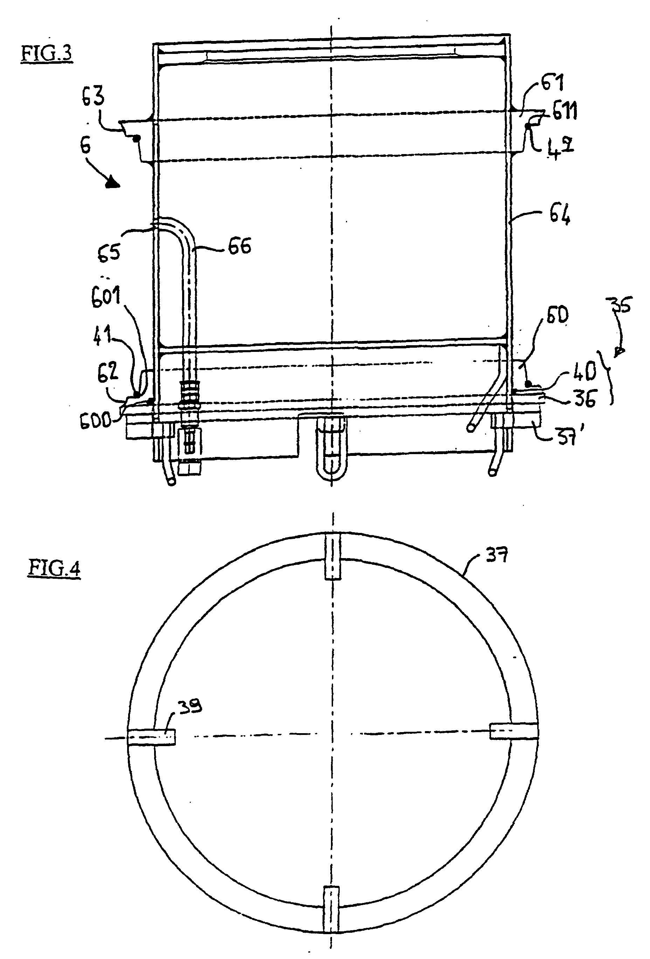

Une telle jante 6 est représentée sur l'ensemble des figures, on la décrira plus particulièrement en référence aux figures 3, 4, 5A, 5B et 6.

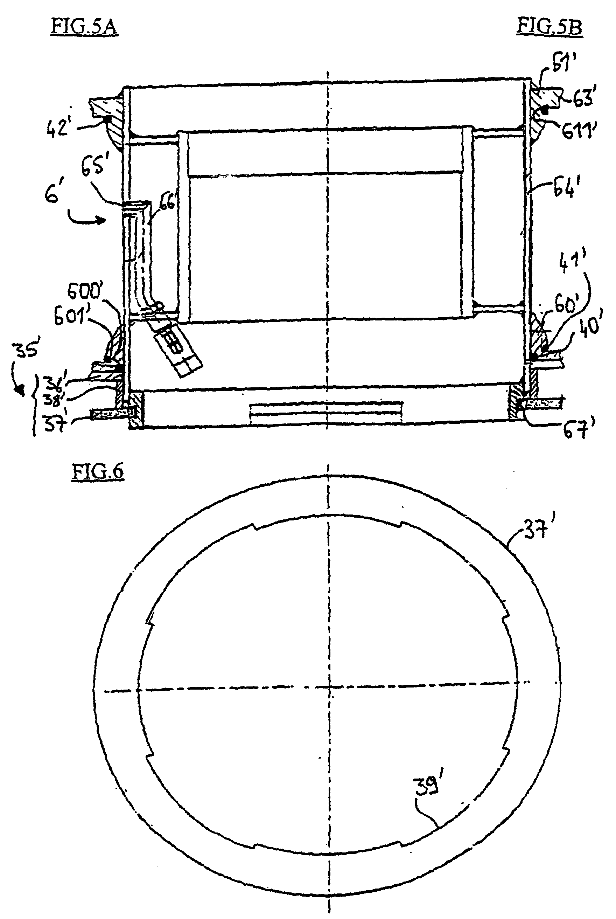

Selon la variante représentée sur les figures 3 et 4, la jante 6 comprend un corps sous forme d'une virole 64 qui porte un talon fixe 61 de support d'un des bourrelets de l'enveloppe de pneumatique et un talon mobile 60 de support de l'autre bourrelet. Chaque talon 61, 60 porte un logement circonférentiel respectivement 63, 62 sous forme d'une rainure qui s'étend sur la circonférence du talon, qui coopèrent, comme on l'a vu, avec les joints toriques 31, 30 portés par les flasques élastiques 8, 9.

Le talon mobile 60 est monté coulissant sur la virole 64 et extractible par rapport à cette dernière, la jante 6 comportant également un système de verrouillage 35 qui permet de maintenir le talon mobile 60 sur la virole 64 et de limiter l'écartement maximal entre les deux talons 60, 61.

Ce système de verrouillage 35 est composé par une rondelle d'appui 36 pour le talon mobile 60, elle-même montée coulissante sur la virole 64 et extractible de cette dernière, et une couronne de verrouillage 37 extractible qui vient se fixer rigidement sur la virole 64. Cette couronne 37 forme dans sa position « fixée » une limitation sur la virole 64 de la position du talon mobile 60 vers l'extérieur de la jante, en constituant une butée pour la rondelle 36 sur laquelle vient s'appuyer le talon mobile 60, directement ou par l'intermédiaire d'une entretoise 38' telle que représentée dans la variante de la jante sur les figures 5A et 5B. En effet, il est aisé de prévoir l'utilisation d'entretoises tubulaires dimensionnelles disposées entre la rondelle d'appui et la couronne de verrouillage. De telles entretoises permettent de caler la jante sur la distance nominale d'entre-tringles correspondant à chaque dimension d'enveloppes de pneumatiques et, ainsi, d'autoriser l'utilisation d'une même jante pour des enveloppes de pneumatiques de dimensions différentes pour une plage donnée. par un simple changement d'entretoise.

La couronne de verrouillage 37 porte des doigts 39 orientés radialement vers l'intérieur de ladite couronne et qui coopèrent avec les orifices, non représentés, en forme de créneaux percés dans la virole 64. Après introduction des doigts dans les orifices, une simple rotation de la couronne 37 permet de verrouiller axialement ladite couronne sur la virole 64.

Selon la variante représentée sur les figures 5A, 5B et 6, la jante 6' comporte une couronne de verrouillage 37' qui porte une surface intérieure présentant des évidements délimitant des appuis circonférentiels internes 39' qui coopèrent avec des évidements portés par la virole 6' et qui débouchent sur une rainure circonférentielle de rétention 67' de sorte que la rotation de la couronne 37' verrouille axialement celle-ci sur la virole 64'. La figure 5A illustre la position verrouillée de la jante 6' dans laquelle la rotation de la couronne 37' a été effectuée alors que la figure 5B montre les positions relatives de la virole 64' et de la couronne 37' en position déverrouillée de la jante 6'.

Quelque soit le système de verrouillage choisi, la jante 6 (6') comporte également un joint d'étanchéité torique 40 (40') dont le diamètre est inférieur à celui de la virole 64 (64') pour l'étanchéité et qui est mis en place par coulissement dans un logement 600 (600') circonférentiel prévu à cet effet et porté par le talon mobile 60 (60'). Sous l'effet de la pression lors du gonflage, une pré-étanchéité entre le talon mobile 60 (60') et la virole 64 (64') est réalisée par le joint torique 40 (40'), qui suffit à permettre l'écartement des talons 60, 61 (60', 61') jusqu'au contact de la rondelle d'appui 36 (36') sur la couronne 37 (37'), ou l'entretoise 38', qui provoque l'étanchéité finale du système.

De plus, il est intéressant de prévoir la présence sur chaque talon de jante 60, 61 (60', 61') d'un joint d'étanchéité torique 41, 42 (41', 42') positionné dans un logement 601, 611 (601', 611') situé à la base de l'épaulement desdits talons de jante 60, 61 (60', 61') afin de garantir l'étanchéité de liaison talon de jante - bourrelet de l'enveloppe de pneumatique même dans le cas où, lors du gonflage, un bourrelet ne se plaque pas totalement sur cette base de l'épaulement. En effet, ceci peut arriver occasionnellement suite à de faibles variations dimensionnelles d'un bourrelet ou à une légère détérioration de son état de surface. Ainsi, en fonction de la position du bourrelet sur le talon de jante, le joint d'étanchéité 41 (41') garde son volume et assure l'étanchéité ou se trouve comprimé dans son logement 601 (601'), la même chose étant vraie pour le joint d'étanchéité 42 (42').

Par ailleurs. un orifice 65 (65') relié à une alimentation en air 66 (66'), est prévu dans la virole 64 (64') afin de pouvoir réaliser le gonflage de la carcasse montée sur la jante.

On décrira le procédé de chapage, en particulier de rechapage, utilisant le dispositif décrit précédemment en référence aux variantes représentées sur le figures 1, 3 et 4. le procédé utilisant les variantes du dispositif représenté sur les autres figures se déduisant sans difficulté de la description qui suit.

L'enveloppe de pneumatique 1 à rechaper ayant été déchapée, on la monte sur la jante 6 et on gonfle la carcasse. Le montage sur la jante dès ce stade permet l'utilisation du même support, la jante 6, pour toutes les étapes du procédé. On peut également utiliser la jante pour réaliser les opérations d'usinage et de réparation, s'il y en a, de l'enveloppe de pneumatiques.

Afin de faciliter les manipulations, on positionne sur un support la jante 6 avec son axe vertical, le talon fixe 61 étant disposé vers le bas et l'ensemble du talon mobile 60 et du système de verrouillage 35 ayant été retiré de la virole 64.

On amène la carcasse de pneumatique 2 avec son axe vertical au dessus de la jante 6 et on fait glisser ladite carcasse sur la virole 64 jusqu'à la butée du bourrelet inférieur de la carcasse, le bourrelet 22 selon les figures, sur le talon fixe 61.

On met alors en place sur la virole 64, le talon mobile 60 de sorte que sa surface de réception du bourrelet 21 soit orientée vers la carcasse de pneumatique 2 et on laisse coulisser ce talon 60, qui descend naturellement jusqu'au contact avec le bourrelet 21. De la même façon, on positionne d'une part le joint torique 40, préalablement graissé, sur la virole 64, et on fait glisser ce dernier jusqu'à ce qu'il vienne se mettre naturellement en place dans le logement circonférentiel 600 porté par le talon mobile 60, et, d'autre part, on positionne la rondelle d'appui 36 qui vient en butée sur le talon 60 et le joint 40.

On présente alors la couronne de verrouillage 37 sur la virole 64 de sorte que les doigts 39 soient en vis-à-vis avec les logements portés par ladite virole. Suite au glissement de la couronne 37 le long de la virole 64, les doigts 39 entrent en contact avec le fond des créneaux. Il suffit ensuite de tourner la couronne 37 sur la virole 64 pour que les doigts 39 se déplacent cette fois circonférentiellement dans les logements en créneau, ce qui verrouille axialement la couronne 37.

La jante 6 étant verrouillée. on gonfle la carcasse 2 à l'aide de l'alimentation 66, ce qui vient pousser le bourrelet supérieur 21 qui refoule le talon 60 et la rondelle d'appui 36 jusqu'à la butée de contact sur la couronne 37, le joint torique 40 étant alors comprimé entre la rondelle d'appui 36 et le talon mobile 60 et assurant son étanchéité définitive.

Ces opérations qui ne nécessitent pas, comme on l'a vu, de précautions particulières mais constituent au contraire des opérations simples à réaliser, suffisent à obtenir le montage étanche de la carcasse 2 sur la jante 6.

Par ailleurs, l'enveloppe de pneumatique cuite sera également facilement extractible de cette jante puisque étant positionnée à nouveau verticalement. Suite au dégonflage de l'enveloppe de pneumatique, le bourrelet supérieur reprend sa position initiale et libère de toute contrainte la couronne de verrouillage 37 , ce qui permet de réaliser aisément son déverrouillage par rotation puis de faire glisser vers l'extérieur de la jante les différents éléments extractibles.

L'étape de montage et de gonflage de la carcasse 2 étant terminée, on procède au gommage de celle-ci par la mise en place d'une bande de roulement crue, par exemple en procédant à une pose de mélange caoutchouteux sous forme de bandelettes précédée par la pose d'une couche intermédiaire, couramment appelée « gomme de liaison ».

Pour mettre en place le moule élastique 7 sur l'enveloppe de pneumatique 1, on procède d'abord à un allongement circonférentiel de ce dernier. Ainsi, on étire radialement le moule élastique 7, notamment par l'intermédiaire de ses ailes 73, 74, de sorte que son diamètre intérieur soit supérieur au diamètre extérieur de la bande de roulement 3. Avantageusement, on prévoit de traiter la surface intérieure du moule élastique 7 à l'aide d'un agent anti-adhésif afin de permettre par la suite de réaliser l'opération de démoulage.

Le moule 7 étant maintenu dans cette position étirée, on place à l'intérieur de ce dernier l'enveloppe de pneumatique 1 de sorte que la bande de roulement 3 soit centrée axialement par rapport au moule 7. On relâche alors l'effort de traction exercé sur le moule 7 qui vient se comprimer sur la bande de roulement 3. Comme on l'a vu précédemment, les inserts métalliques 18 répartis sur la circonférence du moule 7 permettent de garantir l'épaisseur de gomme que l'on souhaite garder entre la carcasse 2 et le fond des sculptures.

Divers types d'appareillages connus permettent de réaliser l'écartement et le maintien en position du moule lors de cette opération.

Pour installer les flasques élastiques 8 et 9 sur l'enveloppe de pneumatique 1, on peut procéder en deux étapes consistant à positionner l'enveloppe de pneumatique 1 et sa jante 6 à axe vertical pour réaliser une pose à plat du premier flasque puis à retourner l'ensemble enveloppe sur jante pour déposer le deuxième flasque. Il est également possible de réaliser la pose du deuxième flasque sans retournement de l'enveloppe en prévoyant une accessibilité suffisante sous cette dernière. Ces opérations de mise en place étant identiques, on ne décrira la mise en place que d'un flasque.

Libre de toute contrainte, le manchon 83 est replié sur le flasque 8, le flasque étant en effet un élément souple.

On positionne d'abord l'extrémité périphérique de petit diamètre 81 du flasque 8, qui porte le joint torique 30. Pour cela, on étire légèrement cette extrémité 81 afin de positionner le joint torique 30 dans son logement 63 porté par le talon 61 correspondant, le diamètre du joint torique 30 et donc de l'extrémité 81 étant légèrement inférieur à celui du logement 63. Cette différence de diamètre permet, du fait de l'élasticité du joint et du flasque, d'assurer la fixation élastique entre le flasque 8 et le talon 61.

On ouvre alors le manchon 83, puis on l'étire afin de lui permettre de recouvrir le bord périphérique 72 du moule 7 et de venir coiffer l'aile 321 du profil en U 32.

Cette simple action permet donc, sans nécessité de fixation supplémentaire, la mise en place du flasque 8 qui recouvre la partie haute du bourrelet 22 de l'enveloppe de pneumatique 1, son flanc 24, l'aile 74 du moule 7, son bord périphérique 72 et une partie du somment du moule 7. On peut, de plus, envisager grâce à ce recouvrement de l'ensemble de la surface du flanc la réalisation d'un nouveau marquage du flanc.

Les flasques 8 et 9 qui sont appairés au moule 7, ne travaillent pas sous contrainte importante, ce qui constitue une différence essentielle avec le système existant dans l'art antérieur et utilisant des membranes extérieure et intérieure comme on l'a vu précédemment.

Les flasques 8 et 9 ayant été mis en place, on évacue l'air compris entre le moule 7, les flasques 8, 9 et l'enveloppe de pneumatique 1 grâce à la valve 17 qui servira également plus tard à évacuer les gaz de vulcanisation. En effet, il est indispensable d'aspirer l'air emprisonné entre la bande de roulement 3 et le moule 7 de façon à obtenir une bonne capacité de reproductibilité et de moulage des sculptures de la bande de roulement.

On peut alors placer à l'intérieur d'une étuve l'ensemble de l'enveloppe de pneumatique 1 et du dispositif de rechapage 5, afin de procéder à la vulcanisation de la bande de roulement. On prévoit par tout système approprié, le maintien d'une pression différentielle positive entre l'intérieur de l'enveloppe de pneumatique et l'étuve.

Lorsque l'opération de vulcanisation est terminée, on sort l'ensemble de l'enveloppe de pneumatique cuite et du dispositif de rechapage de l'étuve. Il est alors très aisé de retirer les deux flasques, puis en utilisant le même appareillage que précédemment d'étirer le moule afin d'en extraire l'enveloppe de pneumatique rechapée montée sur sa jante, le démontage ultérieur de cette dernière ne posant pas, par ailleurs, de difficulté comme on l'a déjà signalé.

## Revendications

1. Procédé de chapage d'une carcasse de pneumatique qui comprend les étapes suivantes:
- on dépose une bande de roulement crue (3) sur une carcasse de pneumatique (2) à chaper,
- la carcasse de pneumatique (2) ainsi recouverte ayant été montée sur une jante (6, 6') et gonflée, on positionne sur la bande de roulement (3) un moule annulaire élastique (7) possédant une surface annulaire intérieure assurant le moulage de la bande de roulement (3),
- on dispose entre chaque bourrelet (21, 22) et chaque bord périphérique (71, 72) du moule (7) un flasque élastique souple (8, 9) qui recouvre la surface extérieure de l'enveloppe de pneumatique constituée par la carcasse recouverte de la bande de roulement, comprise entre ledit bourrelet et ledit bord,
- on dispose l'ensemble (1, 7, 8, 9) dans une enceinte pressurisée et chauffée.

2. Procédé selon la revendication 1, dans lequel la carcasse de pneumatique (2) est montée et gonflée préalablement au positionnement sur cette dernière de la bande de roulement crue (3).

3. Procédé selon l'une quelconque des revendications 1 ou 2, dans lequel la carcasse de pneumatique (2) est gonflée par action directe d'un fluide sur les parois intérieures de ladite carcasse de pneumatique.

4. Procédé selon l'une quelconque des revendications 1 à 3, dans lequel, chaque flasque élastique souple (8, 9) possédant respectivement une extrémité périphérique de petit diamètre (81, 91) et une extrémité périphérique de grand diamètre (82, 92), on met en place sur l'enveloppe de pneumatique (1) chaque flasque élastique (8, 9) par fixation élastique de son extrémité périphérique de petit diamètre (81, 91) sur un talon de la jante (60, 61, 60', 61') et de son extrémité périphérique de grand diamètre (82, 92) sur un bord périphérique (71, 72) du moule (7).

5. Procédé selon la revendication 4, dans lequel la fixation de l'extrémité périphérique de petit diamètre (81, 91) de chaque flasque élastique (8, 9) est réalisée par un joint torique (30, 31) porté par ladite extrémité qui coopère avec un logement circonférentiel (62, 63, 62', 63') porté par un talon de la jante (60, 61, 60', 61').

6. Procédé selon l'une quelconque des revendications 4 ou 5, dans lequel l'extrémité périphérique de grand diamètre (82, 92) de chaque flasque (8, 9) est fixée sur le moule élastique (7) par recouvrement d'un élément d'accrochage (32, 33', 34') solidaire dudit moule.

7. Dispositif de chapage d'une carcasse de pneumatique vulcanisée à l'aide d'une bande de roulement crue comprenant une jante de montage (6, 6') de ladite carcasse, un moule annulaire élastique (7) destiné à assurer le moulage de la bande de roulement crue (3), et deux flasques élastiques souples (8, 9) destinés à recouvrir respectivement la surface extérieure de l'enveloppe de pneumatique (1) ainsi constituée, comprise entre un bourrelet (21, 22) de ladite enveloppe et le bord périphérique (71, 72) du moule correspondant.

8. Dispositif selon la revendication 7, dans lequel la jante comprend une chambre à air.

9. Dispositif selon la revendication 7, dans lequel la jante (6, 6') comprend une virole (64, 64') sur laquelle est montée un talon fixe (31) de support d'un bourrelet de la carcasse de pneumatique et un talon (60, 60') de support de l'autre bourrelet coulissant axialement et extractible de la virole (64, 64'), la jante (6, 6') comprenant également un système de verrouillage (35, 35') limitant l'écartement maximum des talons (60, 61' 60', 61') l'un de l'autre, la carcasse étant gonflée par action directe d'un fluide sur ses parois intérieures.

10. Dispositif selon la revendication 9, dans lequel le système de verrouillage (35, 35') comprend une rondelle d'appui (36, 36') du talon coulissant (60, 60'), elle-même montée coulissante sur la virole (64, 64') extérieurement à la zone de ladite virole comprise entre les deux talons (60, 61, 60', 61'), et une couronne de verrouillage (37, 37') qui coopère avec la virole (64,64').

11. Dispositif selon l'une quelconque des revendications 9 ou 10, dans lequel la jante (6, 6') comporte un joint torique d'étanchéité (40, 40') disposé dans un logement circonférentiel (600, 600') porté par le talon coulissant (60, 60'), ledit joint torique étant situé sur la virole (64, 64') à l'extérieur de la zone de ladite virole comprise entre les deux talons (60, 61, 60', 61').

12. Dispositif selon l'une quelconque des revendications 7 à 11 dans lequel la surface extérieure circonférentielle du moule élastique (7) est recouverte d'un manchon drainant élastique (15) recouvert par une membrane annulaire élastique caoutchouteuse (16) portant une valve à vide anti-retour (17).

13. Dispositif selon l'une quelconque des revendications 7 à 12, dans lequel l'extrémité périphérique de plus grand diamètre (82, 92) de chaque flasque (8, 9) se prolonge par un manchon élastique (83, 93), le diamètre de ce manchon étant inférieur à celui du bord périphérique (71, 72) du moule (7).

14. Dispositif selon l'ensemble des revendications 12 et 13, dans lequel la membrane élastique caoutchouteuse recouvrant le manchon drainant élastique (15) est composée de deux parties, chacune constituée par le manchon (83, 93) prolongeant chacun des flasques (8, 9) et que l'un au moins de ces manchons (83, 93) prolongeant les flasques porte la valve à vide anti-retour (17).

15. Dispositif selon l'une quelconque des revendications 7 à 14, dans lequel le moule élastique (7) porte un élément d'accrochage (32, 33', 34') de l'extrémité périphérique de plus grand diamètre (82, 92) de chaque flasque élastique (8, 9).

16. Dispositif selon la revendication 15, dans lequel chaque élément d'accrochage est constitué par un joint torique (33') vulcanisé sur chaque bord périphérique (71, 72) du moule (7).

17. Dispositif selon la revendication 15, dans lequel chaque élément d'accrochage est constitué par un épaulement à arête vive (34') porté par chaque bord périphérique (71, 72) du moule (7).

18. Dispositif selon la revendication 15, dans lequel chaque élément d'accrochage est constituée par une aile (321, 322) d'un profil en U (32) fixé sur le moule (7).

19. Dispositif selon l'ensemble des revendications 12 et 18, dans lequel une partie du manchon drainant élastique (15) est recouverte par le profil en U (32).

20. Dispositif selon l'ensemble des revendications 13 et 19, dans lequel le manchon drainant élastique (15) est composé de trois parties dont deux parties latérales solidaires respectivement des manchons (83, 93) prolongeant chaque flasque élastique (8, 9) et d'une partie centrale solidaire du moule (7) et située sous le profil en U (32).

21. Dispositif selon l'une quelconque des revendications 7 à 20, dans lequel le moule élastique (7) porte un dispositif de limitation (18) de son diamètre en compression.

22. Dispositif selon l'une quelconque des revendications 7 à 21, dans lequel l'extrémité périphérique de petit diamètre (81, 91) de chaque flasque élastique (8, 9) porte un joint torique (30, 31) destiné à coopérer avec un logement circonférentiel (62, 63, 62', 63') porté par un talon (60, 61, 60', 61') de la jante (6, 6'), le diamètre de ladite extrémité étant inférieur à celui du logement circonférentiel (62, 63, 62', 63').

## Patentansprüche

1. Verfahren zum Belegen einer Reifenkarkasse, mit den folgenden Schritten:
- man legt eine rohe Lauffläche (3) auf eine zu belegende Reifenkarkasse (2) auf,
- nachdem die so abgedeckte Reifenkarkasse (2) auf einer Felge (6, 6') montiert und aufgepumpt wurde, positioniert man auf der Lauffläche (3) ein ringförmiges, elastisches Formwerkzeug (7), das eine ringförmige Innenoberfläche besitzt, die das Abformen der Lauffläche (3) sicherstellt,
- man ordnet zwischen jedem Wulst (21, 22) und jedem Umfangsrand (71, 72) des Formwerkzeugs (7) einen elastischen, nachgiebigen Flansch (8, 9) an, der die Außenoberfläche des Reifenmantels abdeckt, der von der mit der Lauffläche abgedeckten Karkasse gebildet ist, wobei der genannte Wulst und der genannte Rand mit umfaßt sind, und
- man ordnet die Anordnung (1, 7, 8, 9) in einem druckbeaufschlagbaren und beheizten Raum an.

2. Verfahren nach Anspruch 1, worin die Reifenkarkasse (2) vorab vor dem Positionieren der rohen Lauffläche (3) auf dieser montiert und aufgepumpt wird.

3. Verfahren nach irgendeinem der Ansprüche 1 oder 2, worin die Reifenkarkasse (2) durch unmittelbare Einwirkung eines Strömungsmittels auf die Innenwände der genannten Reifenkarkasse aufgepumpt wird.

4. Verfahren nach irgendeinem der Ansprüche 1 bis 3, worin jeder nachgiebige, elastische Flansch (8, 9) jeweils ein Umfangsende (81, 91) mit kleinem Durchmesser und ein Umfangsende (82, 92) mit großen Durchmesser besitzt, und man jeden elastischen Flansch (8, 9) an seinem Platz auf dem Reifenmantel (1) durch elastische Befestigung seines Umfangsendes (81, 81) mit kleinem Durchmesser auf einem Absatz (60, 61, 60', 61') der Felge und seines Umfangsendes (82, 92) mit großem Durchmesser auf einem Umfangsrand (71, 72) des Formwerkzeugs (7) anordnet.

5. Verfahren nach Anspruch 4, worin die Befestigung des Umfangsendes (81, 91) mit kleinem Ende eines jeden Flansches (8, 9) durch eine torusförmige Dichtung (30, 31) durchgeführt wird, die von dem genannten Ende getragen ist und mit einem Umfangssitz (62, 63, 62', 63') zusammenwirkt, der durch einen Ansatz (60, 61, 60', 61') der Felge getragen ist.

6. Verfahren nach irgendeinem der Ansprüche 4 oder 5, worin das Umfangsende (82, 92) mit großem Durchmesser eines jeden Flansches (8, 9) auf dem elastischen Formwerkzeug (7) durch Abdecken mit einem Verankerungselement (32, 33', 34') befestigt wird.

7. Vorrichtung zur Belegung einer vulkanisierten Reifenkarkasse mit Hilfe einer rohen Lauffläche, mit einer Montagefelge (6, 6') für die genannte Karkasse, einem ringförmigen, elastischen Formwerkzeug (7), das dazu bestimmt ist, das Abformen einer rohen Lauffläche sicherzustellen, und zwei elastischen, nachgiebigen Flanschen (8, 9), die dazu bestimmt sind, jeweils die Außenoberfläche des so gebildeten Reifenmantels (1) abzudecken, die zwischen einem Wulst (21, 22) des genannten Mantels und dem Umfangsrand (71, 72) des entsprechenden Formwerkzeugs vorliegt.

8. Vorrichtung nach Anspruch 7, worin die Felge eine Luftkammer aufweist.

9. Vorrichtung nach Anspruch 7, worin die Felge (6, 6') einen Ring (64, 64') aufweist, auf dem ein fester Absatz (31) zum Tragen eines Wulstes der Reifenkarkasse und ein Absatz (60, 60') zum Tragen des anderen Wulstes angebracht ist, der axial verschieblich und vom Ring (64, 65') abziehbar ist, wobei die Felge (6, 6') auch ein Verriegelungssystem (35, 35') aufweist, das die maximale Abspreizung der Absätze (60, 61' 60', 61') voneinander begrenzt, und wobei die Karkasse durch unmittelbare Einwirkung eines Strömungsmittels auf ihre Innenwände aufgepumpt wird.

10. Vorrichtung nach Anspruch 9, worin das Verriegelungssystem (35, 35') eine Auflagescheibe (36, 36') für den verschieblichen Absatz (60, 60'), die ihrerseits auf dem Ring (64, 64') außerhalb der Zone des genannten Rings verschieblich angebracht ist, die zwischen zwei Absätzen (60, 61, 60', 61') liegt, sowie einen Verriegelungskranz (37, 37') aufweist, der mit dem Ring (64, 64') zusammenwirkt.

11. Vorrichtung nach irgendeinem der Ansprüche 9 oder 10, worin die Felge (6, 6') eine torusförmige Abdichtungspackung bzw. Dichtung (40, 40') aufweist, die in einem Umfangssitz (600, 600') angeordnet ist, der vom verschieblichen Absatz (60, 60') getragen ist, wobei die genannte, torusförmige Dichtung auf dem Ring (64, 64') auf der Außenseite der Zone des genannten Rings sitzt, die zwischen den beiden Absätzen (60, 61, 60', 61') liegt.

12. Vorrichtung nach irgendeinem der Ansprüche 7 bis 11, worin die Umfangs-Außenoberfläche des elastischen Formwerkzeugs (7) von einer elastischen Ableitungsmuffe (15) abgedeckt ist, die von einer ringförmigen, elastischen, kautschukhaltigen Membran (16) abgedeckt ist, die ein Vakuum-Rückschlagventil (17) trägt.

13. Vorrichtung nach irgendeinem der Ansprüche 7 bis 12, worin das Umfangsende mit dem größten Durchmesser (82, 92) eines jeden Flansches (8, 9) durch eine elastische Muffe (83, 93) verlängert ist, der Durchmesser dieser Muffe aber kleiner ist als der des Umfangsrandes (71, 72) des Formwerkzeugs (7).

14. Vorrichtung nach der Gruppe der Ansprüche 12 und 13, worin die elastische, kautschukhaltige Membran, die die elastische Ableitungsmuffe (15) abdeckt, aus zwei Teilen zusammengesetzt ist, wobei jede von der Muffe (83, 93) gebildet ist, die jeden der Flansche (8, 9) verlängert, und daß mindestens die eine dieser Muffen (83, 93), die die Flansch verlängert, das Vakuum-Rückschlagventil (17) trägt.

15. Vorrichtung nach irgendeinem der Ansprüche 7 bis 14, worin das elastische Formwerkzeug (7) ein Verankerungselement (32, 33', 34') für das Umfangsende mit größtem Durchmesser (82, 92) eines jeden elastischen Flansches (8, 9) trägt.

16. Vorrichtung nach Anspruch 15, worin das Verankerungselement von einer torusförmigen Dichtung (33') gebildet ist, die auf jeden Umfangsrand (71, 72) des Formwerkzeugs (7) aufvulkanisiert ist.

17. Vorrichtung nach Anspruch 15, worin jedes Verankerungselement von einer scharfkantigen Schulter (34') gebildet ist, die von jedem Umfangsrand (71, 72) des Formwerkzeugs (7) getragen ist.

18. Vorrichtung nach Anspruch 15, worin jedes Verankerungselement von einem Schenkel (321, 322) eines U-Profils (32) gebildet ist, das auf dem Formwerkzeug (7) befestigt ist.

19. Vorrichtung nach der Gruppe der Ansprüche 12 und 18, worin ein Teil der elastischen Ableitungsmuffe (15) vom U-Profil abgedeckt ist.

20. Vorrichtung nach der Gruppe der Ansprüche 13 und 19, worin die elastische Ableitungsmuffe (15) aus drei Teilen zusammengesetzt ist, von denen die beiden seitlichen Teile jeweils fest mit den Muffen (83, 93) verbunden sind, die jeden elastischen Flansch (8, 9) verlängern, und ein mittiger Teil fest mit dem Formwerkzeug (7) verbunden ist und unter dem U-Profil (32) sitzt.

21. Vorrichtung nach irgendeinem der Ansprüche 7 bis 20, worin das elastische Formwerkzeug (7) eine Begrenzungsvorrichtung (18) seines Durchmessers bei Druck aufweist.

22. Vorrichtung nach irgendeinem der Ansprüche 7 bis 21, worin das Umfangsende mit kleinem Durchmesser (81, 91) eines jeden elastischen Flansches (8, 9) eine torusförmige Dichtung (30, 31) trägt, die dazu bestimmt ist, mit einem Umfangssitz (62, 63, 62', 63') zusammenzuwirken, der von einem Absatz (60, 61, 60', 61') der Felge (6, 6') getragen ist, wobei der Durchmesser des genannten Endes kleiner ist als der des Umfangssitzes (62, 63, 62', 63').

## Claims

1. A method of treading a tyre carcass, which comprises the following steps:
- an uncured tread (3) is laid on a tyre carcass (2) to be treaded;
- the tyre carcass (2) thus covered having been mounted on a rim (6, 6') and inflated, a resilient ring mould (7) possessing an inner annular surface ensuring moulding of the tread (3) is positioned on the tread (3);
- a flexible resilient flange (8, 9) is placed between each bead (21, 22) and each peripheral edge (71, 72) of the mould (7), covering the outer surface of the tyre casing formed by the carcass covered with the tread, lying between said bead and said edge; and
- the assembly (1, 7, 8, 9) is placed in a pressurised, heated enclosure.

2. A method according to claim 1, in which the tyre carcass (2) is mounted and inflated prior to positioning the uncured tread (3) on the latter.

3. A method according to either one of claims 1 or 2, in which the tyre carcass (2) is inflated by direct action of a fluid on the inner walls of said tyre carcass.

4. A method according to any one of claims 1 to 3, in which, each flexible resilient flange (8, 9) having respectively a small-diameter peripheral end (81, 91) and a large-diameter peripheral end (82, 92), each resilient flange (8, 9) is placed on the tyre casing (1) by elastic attachment of its small-diameter peripheral end (81, 91) on a heel of the rim (60, 61, 60', 61') and of its large-diameter peripheral end (82, 92) on a peripheral edge (71, 72) of the mould (7).

5. A method according to claim 4, in which the attachment of the small-diameter peripheral end (81, 91) of each resilient flange (8, 9) is made by an O-ring (30, 31) carried by said end, which cooperates with a circumferential housing (62, 63, 62', 63') carried by a heel of the rim (60, 61, 60', 61').

6. A method according to any one of claims 4 of 5, in which the large-diameter peripheral end (82, 92) of each flange (8, 9) is attached to the resilient mould (7) by covering of a hooking element (32, 33', 34') integral with said mould.

7. An apparatus for treading a vulcanised tyre carcass with an uncured tread, comprising a mounting rim (6, 6') for said carcass, a resilient ring mould (7) for moulding the uncured tread (3) and two flexible resilient flanges (8, 9) for covering the outer surface of the tyre casing (1) thus formed, lying between a bead (21, 22) of said casing and the peripheral edge (71, 72) of the corresponding mould respectively.

8. An apparatus according to claim 7, in which the rim comprises an inner tube.

9. An apparatus according to claim 7, in which the rim (6, 6') comprises a collar (64, 64') on which is mounted a stationary heel (31) supporting one bead of the tyre carcass and a heel (60, 60') supporting the other bead and being slidable axially and removable from the collar (64, 64'), the rim (6, 6') also comprising a locking system (35, 35') limiting the maximum separation of the heels (60, 61', 60', 61') from each other, the carcass being inflated by direct action of a fluid on its inner walls.

10. An apparatus according to claim 9, in which the locking system (35, 35') comprises a support washer (36, 36') of the sliding heel (60, 60'), mounted in turn sliding on the collar (64, 64') externally to the zone of said collar between the two heels (60, 61, 60', 61'), and a locking ring (37, 37') which cooperates with the collar (64, 64').

11. An apparatus according to any one of claims 9 or 10, in which the rim (6, 6') comprises an O-ring seal (40, 40') positioned in a circumferential housing (600, 600') of the mobile heel (60, 60'), said O-ring being positioned on the collar (64, 64') outside the zone of said collar between the two heels (60, 61, 60', 61').

12. An apparatus according to any one of claims 7 to 11, in which the circumferential outer surface of the resilient mould (7) is covered by a resilient drain sleeve (15), which is covered by a rubbery resilient annular membrane (16) having a non-return vacuum valve (17).

13. An apparatus according to any one of claims 7 to 12, in which the larger-diameter peripheral end (82, 92) of each flange (8, 9) is extended by a resilient sleeve (83, 93), the diameter of this sleeve being less than that of the peripheral edge (71, 72) of the mould (7).

14. An apparatus according to both of claims 12 and 13, in which the rubbery resilient membrane covering the resilient drain sleeve (15) is composed of two parts, each constituted by the sleeve (83, 93) extending each of the flanges (8, 9), and in which at least one of these sleeves (83, 93) extending the flanges carries the non-return vacuum valve (17).

15. An apparatus according to any one of claims 7 to 14, in which the resilient mould (7) bears a hooking element (32, 33', 34') for the larger-diameter peripheral end (82, 92) of each resilient flange (8, 9).

16. An apparatus according to claim 15, in which the hooking element is formed by an O-ring (33') vulcanised on each peripheral edge (71, 72) of the mould (7).

17. An apparatus according to claim 15, in which each hooking element is formed by a sharp-edged shoulder (34') borne by each peripheral edge (71, 72) of the mould (7).

18. An apparatus according to claim 15, in which each hooking element is formed by a wing (321, 322) of a U-section (32) attached on the mould (7).

19. An apparatus according to both of claims 12 and 18, in which part of the resilient drain sleeve (15) is covered by the U-section (32).

20. An apparatus according to both of claims 13 and 19, in which the resilient drain sleeve (15) is composed of three parts, of which two lateral parts are integral respectively with the sleeves (83, 93) extending each resilient flange (8, 9) and a central part is integral with the mould (7) and situated under the U-section (32).

21. An apparatus according to any one of claims 7 to 20, in which the resilient mould (7) bears a means (18) for limiting its diameter in compression.

22. An apparatus according to any one of claims 7 to 21, in which the small-diameter peripheral end (81, 91) of each resilient flange (8, 9) carries an O-ring (30, 31) for cooperating with a circumferential housing (62, 63, 62', 63') carried by a heel (60, 61, 60', 61') of the rim (6, 6'), the diameter of said end being less than that of the circumferential housing (62, 63, 62', 63').
